# EUROPEAN PATENT SPECIFICATION

(11) **EP 3 289 871 B1**
(45) Date of publication and mention of the grant of the patent: **01.05.2019**
(21) Application number: 16186805.4
(22) Date of filing: 01.09.2016
(51) Int. Cl.: A01M 23/16, A01M 23/24, A01M 23/38

(54) **CHILD AND PET SECURED RODENT POISON FREE TRAP**
KINDER- UND HAUSTIERSICHERE GIFTFREIE NAGETIERFALLE
PIEGE SANS RODENTICIDE AVEC SECURITE POUR LES ENFANTS ET LES ANIMAUX DOMESTIQUES

(43) Date of publication of application: 07.03.2018
(73) Proprietor: Camro A/S, 9610 Nørager (DK)
(72) Inventor: Sørensen, Kurt, 9610 Nørager (DK)
(74) Representative: Larsen & Birkeholm A/S

(56) References cited:
- WO-A1-80/00397
- CA-A- 477 943
- US-A- 2 170 470
- US-A- 3 733 735
- US-A- 5 123 200

## Description

### Technical field of the invention

The present invention relates to the field of traps for rats and mice, and in particular relates to traps for use on the ground.

### Background of the invention

A number of traps are known in the art. Types are known using poison for killing rodents, and further a number of traps are known that are poison free. The poison free traps generally fall in two categories, these being mechanical traps and electrical traps. One example of such a trap is shown in WO 80/00397.

Traditional traps have the disadvantage that it is easy for larger pets, a child, or even a curious adult to trigger the killing means with the paw/hand, thereby causing accidents.

### Object of the Invention

The objective of the present invention is to provide a poison free trap in which it is very difficult, or preferably impossible, to trigger the killing means with the paw/hand.

### Description of the Invention

A first aspect of the present invention relates to a poison free rat and/or mouse trap for placement on the ground, the poison free trap comprising:
- a housing with a rat and/or mouse entry opening positioned in the side wall and/or in the bottom wall; and
- a mechanical and/or electrical killing device positioned within the housing; wherein the killing means of the mechanical and/or electrical killing device is positioned at a level above the level of the rat and/or mouse entry opening, and wherein at least a part of the rat and/or mouse entry opening is lined with one or more rows of serrated protrusions.

A second aspect of the present invention relates to a poison free rat and/or mouse trap for placement on the ground, the poison free trap comprising:
- a housing with a rat and/or mouse entry opening positioned in the side wall and/or in the bottom wall; and
- a mechanical and/or electrical killing device positioned within the housing; wherein at least a part of the rat and/or mouse entry opening is lined with one or more rows of serrated protrusions.

When a larger pet, a child, or even a curious adult tries to force the paw/hand through the rat and/or mouse entry opening, the response of withdrawal is immediate due to the unpleasant palpable sensation of the serrated protrusions, thereby avoiding that the paw/hand reaches the killing means.

The use of the term "serrated" or "serrations" in this disclosure will generally be used to refer to an object having teeth, ridges, peaks, points, projections and/or protrusions extending from the surface thereof. These serrations can be of any shape, preferably having points or sharp edges. Further, although a serration is generally referred to as extending from a surface, one of skill in the art would recognize that a serration may be formed by removing portions of a surface to form valleys, troughs or the like resulting in the creation of corresponding serrations extending from a new surface.

Electrical traps are characterised by the killing mechanism being an electrical shock device almost instantly killing the rodent. Mechanical traps are characterised by killing means that strikes the rodent and almost instantly kills the rodent. The killing means in mechanical traps are normally spring driven or gas pressure driven.

In one or more embodiments, the bottom wall of the housing is configured as an open-ended tunnel, the tunnel being configured and sized to allow a rat and/or mouse to pass from one end to the other; wherein the rat and/or mouse entry opening is positioned a1) in the side wall and/or a2) in an open end, and b) in the upper wall of the open-ended tunnel. The open-ended configuration allows the rat and/or mouse to see through the tunnel to the other side of the trap, whereby it will not hesitate entering the trap.

In one or more embodiments, the open-ended tunnel is configured with an open bottom, such that a rat and/or mouse within the open-ended tunnel is walking on the ground on which the poison free trap is positioned. This configuration makes the rat and/or mouse to feel more safe, and thereby more prone to stay within the open-ended tunnel.

In one or more embodiments, the entry opening is positioned in both the side wall and in an open end of the open-ended tunnel. This configuration makes it easier for the killed rat and/or mouse to fall out of the trap, such that a predator, e.g. a fox, can remove it from the trap.

In one or more embodiments, the killing means of the mechanical and/or electrical killing device is positioned at a level above the level of the rat and/or mouse entry opening such that the rat and/or mouse can reach the killing means when standing within the housing on their hind legs. This configuration increases the number of times that a rat and/or mouse entering the trap will encounter the killing means.

The dimensions of the rat and/or mouse entry opening are important. A narrow entry opening below 40 mm will partly solve the problem with reaching the killing means, however, a rat is not prone to not enter such a narrow entry opening.

In one or more embodiments, the rat and/or mouse entry opening and the one or more rows of serrated protrusions are sized and configured to leave an opening with a free height of at least 40 mm, such as within the range of 40-100 mm, e.g. at least 45 mm, such as within the range of 45-95 mm, e.g. at least 50 mm, such as within the range of 50-90 mm, e.g. at least 55 mm, such as within the range of 55-85 mm, e.g. at least 60 mm, such as within the range of 60-80 mm, e.g. at least 65 mm, such as within the range of 70-75 mm, e.g. at least 70 mm.

In one or more embodiments, the rat and/or mouse entry opening and the one or more rows of serrated protrusions are sized and configured to leave an opening with a clear width of at least 40 mm, such as within the range of 40-100 mm, e.g. at least 45 mm, such as within the range of 45-95 mm, e.g. at least 50 mm, such as within the range of 50-90 mm, e.g. at least 55 mm, such as within the range of 55-85 mm, e.g. at least 60 mm, such as within the range of 60-80 mm, e.g. at least 65 mm, such as within the range of 70-75 mm, e.g. at least 70 mm.

In one or more embodiments, at least the top entrance section of the rat and/or mouse entry opening is lined with one or more rows of serrated protrusions. This position is important, as the paw/hand of an "intruder" will seek upwards.

In one or more embodiments, the trap comprises means for securing the housing to the ground and/or to a wall near the ground, to avoid that the trap can be turned on its side. Such means may be bolts or earth anchors.

In one or more embodiments, a part of the side wall is configured as a door with a lock for restricted access to the killing device located within the housing.

Advantageously the killing device is a gas cartridge operated device. Such device has shown to be appropriate for such installation. Other types of killing devices may however also be used without limiting the scope of the invention. The gas cartridge operated device, as well as other non-electrical devices, has the advantage of being usable in APEX areas without the risk of igniting gas or flammable fluid.

Advantageously a signal indicating the activation of the killing device is transmitted wirelessly to a receiving device. Hereby electrical connections between the killing device and a communication device, placed at a distance from the killing device, may be avoided. The communication device eventually has a radio module enabling the device to send SMS messages to a computer.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

### Brief description of the figures

Figure 1 is a perspective view of a poison free rat and/or mouse trap in accordance with various embodiments of the invention;
Figure 2 is a side view of a poison free rat and/or mouse trap in accordance with various embodiments of the invention, where a side wall of the housing has been removed;
Figure 3 is a perspective view of a poison free rat and/or mouse trap in accordance with various embodiments of the invention, where a side wall of the housing has been removed; and
Figure 4 is a perspective view of a bottom wall of the housing configured as an open-ended tunnel.

### References

- 100: Poison free rat and/or mouse trap
- 200: Housing
- 210: Rat and/or mouse entry opening
- 212: Serrated protrusions
- 220: Side wall
- 222: Door
- 230: Bottom wall
- 232: Side wall
- 234: Open end
- 236: Upper wall
- 300: Mechanical and/or electrical killing device
- 310: Killing means

### Detailed Description of the Invention

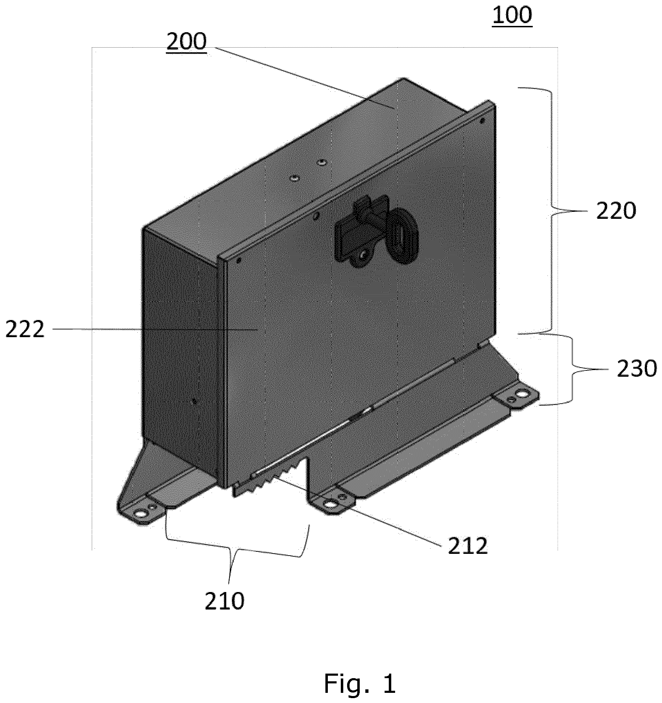

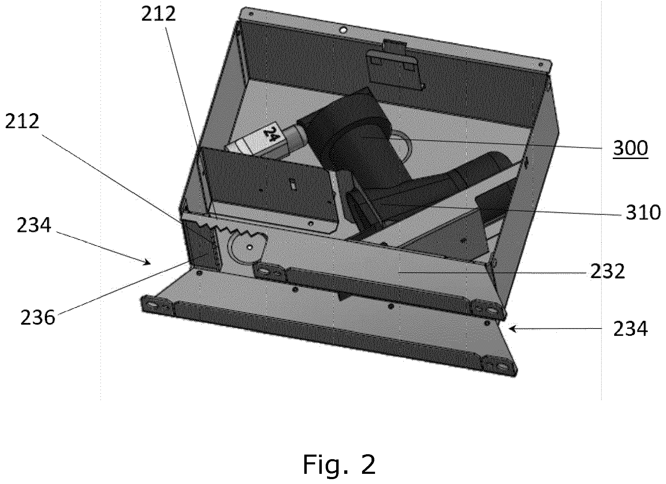

Figure 1 is a perspective view of a poison free rat and/or mouse trap in accordance with various embodiments of the invention. The poison free rat and/or mouse trap 100 comprises a) a housing 200 and b) a mechanical and/or electrical killing device 300 (Figure 2) positioned within the housing 200.

The housing 200 is here shown configured as an open-ended tunnel. The open-ended tunnel 200 is configured and sized to allow a rat and/or mouse to pass from one end to the other. A rat and/or mouse entry opening 210 is partly positioned in the side wall 232, in an open end 234, and in the upper wall 236 of the open-ended tunnel (Figure 2). The top entrance section of the rat and/or mouse entry opening 210 is lined with rows of serrated protrusions 212. A part of the side wall 220 is configured as a door 222 with a lock for restricted access to the killing device 300 located within the housing 200.

Figure 2 is a side view of a poison free rat and/or mouse trap in accordance with various embodiments of the invention, where a side wall (the door 222) of the housing has been removed. Here, it can be seen, that the killing means 310 of the mechanical and/or electrical killing device 300 is positioned at a level above the level of the rat and/or mouse entry opening 210. The position of the killing means 310 in relation to the rat and/or mouse entry opening 210 is crucial in order for the rows of serrated protrusions 212 to have any effect. When a larger pet, a child, or even a curious adult tries to force the paw/hand through the rat and/or mouse entry opening 210, the response of withdrawal is immediate due to the unpleasant palpable sensation of the serrated protrusions 212, thereby avoiding that the paw/hand reaches the killing means. Furthermore, the killing means of the mechanical and/or electrical killing device is positioned at a level above the level of the rat and/or mouse entry opening such that the rat and/or mouse can reach the killing means when standing within the housing on their hind legs. This configuration increases the number of times that a rat and/or mouse entering the trap will encounter the killing means.

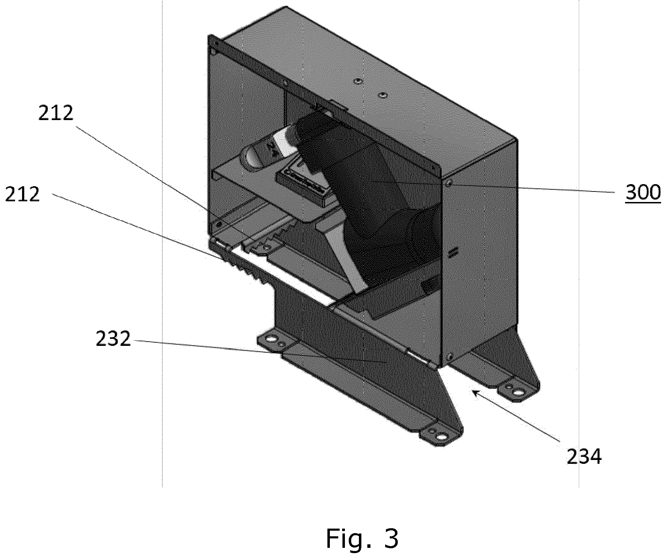

The open-ended tunnel is configured with an open bottom, such that a rat and/or mouse within the open-ended tunnel is walking on the ground on which the poison free trap is positioned. This configuration makes the rat and/or mouse to feel more safe, and thereby more prone to stay within the open-ended tunnel. The open-ended configuration allows the rat and/or mouse to see through the tunnel to the other side of the trap, whereby it will not hesitate entering the trap. Figure 3 is a perspective view of a poison free rat and/or mouse trap in accordance with various embodiments of the invention, where a side wall of the housing has been removed. The shown killing device 300, is a gas driven device, where a killing piston is provided inside the trap housing and upon triggering of a trigger mechanism present in a cavity open for rat and/or mouse entry will propagate into the cavity of the trigger mechanism and, with a significant force, hit the rat and/or mouse that has activated the trigger mechanism. The rat and/or mouse is attracted to the cavity by bait present inside the killing device. Other types of traps or killing devices may however also be used.

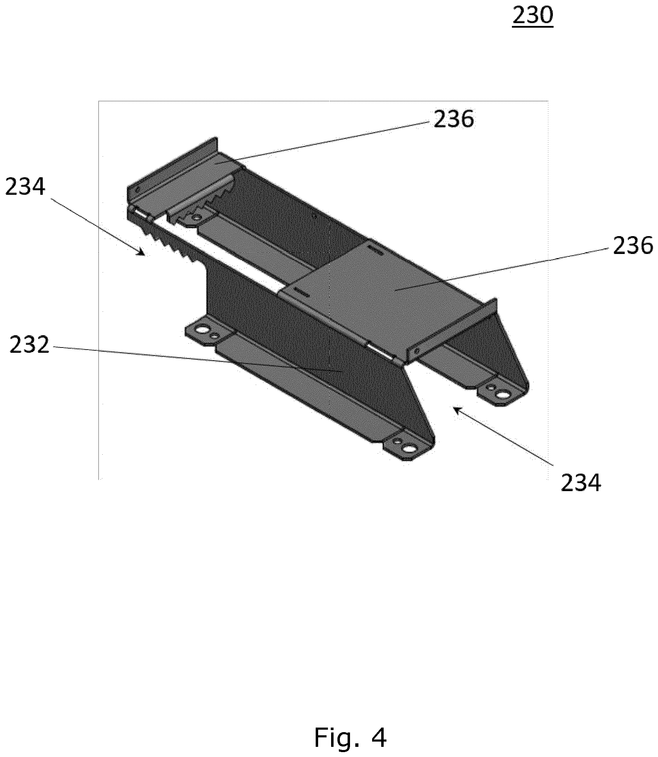

Figure 4 is a perspective view of a bottom wall of the housing configured as an open-ended tunnel.

## Claims

1. A poison free rat and/or mouse trap (100) for placement on the ground, the poison free trap (100) comprising:
- a housing (200) with a rat and/or mouse entry opening (210) positioned in the side wall (220) and/or in the bottom wall (230); and
- a mechanical and/or electrical killing device (300) positioned within the housing (200); **characterized in that** the killing means (310) of the mechanical and/or electrical killing device (300) is positioned at a level above the level of the rat and/or mouse entry opening (210), and wherein at least a part of the rat and/or mouse entry opening (210) is lined with one or more rows of serrated protrusions (212).

2. A poison free trap (100) according to claim 1, **characterized in that** the bottom wall (230) of the housing (200) is configured as an open-ended tunnel, the tunnel being configured and sized to allow a rat and/or mouse to pass from one end to the other; wherein the rat and/or mouse entry opening (210) is positioned a1) in the side wall (232) and/or a2) in an open end (234), and b) in the upper wall (236) of the open-ended tunnel.

3. A poison free trap (100) according to claim 2, **characterized in that** the open-ended tunnel is configured with an open bottom, such that a rat and/or mouse within the open-ended tunnel is walking on the ground on which the poison free trap is positioned.

4. A poison free trap (100) according to any one of the claims 2-3, **characterized in that** the entry opening (210) is positioned in both the side wall (232) and in an open end (234) of the open-ended tunnel.

5. A poison free trap (100) according to any one of the claims 1-4, **characterized in that** the killing means (310) of the mechanical and/or electrical killing device (300) is positioned at a level above the level of the rat and/or mouse entry opening such that the rat and/or mouse can reach the killing means (310) when standing within the housing (200) on their hind legs.

6. A poison free trap (100) according to any one of the claims 1-5, **characterized in that** the rat and/or mouse entry opening (210) and the one or more rows of serrated protrusions (212) are sized and configured to leave an opening with a free height of at least 40 mm.

7. A poison free trap (100) according to any one of the claims 1-6, **characterized in that** the rat and/or mouse entry opening (210) and the one or more rows of serrated protrusions (212) are sized and configured to leave an opening with a clear width of at least 40 mm.

8. A poison free trap (100) according to any one of the claims 1-7, **characterized in that** at least the top entrance section of the rat and/or mouse entry opening (210) is lined with one or more rows of serrated protrusions (212).

9. A poison free trap (100) according to any one of the claims 1-8, **characterized in that** the killing device is a gas cartridge operated device.

10. A poison free trap (100) according to any one of the claims 1-9, **characterized in that** the poison free trap (100) further comprises means for securing the housing to the ground and/or to a wall near the ground, to avoid that the trap can be turned on its side.

## Patentansprüche

1. Giftfreie Ratten- und/oder Mausefalle (100) zum Aufstellen auf dem Boden, wobei die giftfreie Falle (100) umfasst:
- ein Gehäuse (200) mit einer Ratten- und/oder Mauseintrittsöffnung (210), die in der Seitenwand (220) und/oder in der unteren Wand (230) positioniert ist; und
- eine mechanische und/oder elektrische Tötungsvorrichtung (300), die innerhalb des Gehäuses (200) positioniert ist; **dadurch gekennzeichnet, dass** die Tötungseinrichtung (310) der mechanischen und/oder elektrischen Tötungsvorrichtung (300) auf einer Ebene über der Ebene der Ratten- und/oder Mauseintrittsöffnung (210) positioniert ist, und wobei zumindest ein Teil der Ratten- und/oder Mauseintrittsöffnung (210) mit einer oder mehreren Reihen von gezackten Vorsprüngen (212) ausgekleidet ist.

2. Giftfreie Falle (100) nach Anspruch 1, **dadurch gekennzeichnet, dass** die Bodenwand (230) des Gehäuses (200) als ein Tunnel mit offenem Ende konfiguriert ist, wobei der Tunnel konfiguriert und bemessen ist, um zu ermöglichen, dass eine Ratte und/oder Maus von einem Ende zum anderen hindurchtreten kann; wobei die Ratten- und/oder Mauseintrittsöffnung (210) a1) in der Seitenwand (232) und/oder a2) in einem offenen Ende (234) und b) in der oberen Wand (236) des Tunnels mit offenem Ende positioniert ist.

3. Giftfreie Falle (100) nach Anspruch 2, **dadurch gekennzeichnet, dass** der Tunnel mit offenem Ende mit einer offenen Unterseite konfiguriert ist, sodass eine Ratte und/oder Maus innerhalb des Tunnels mit offenem Ende auf dem Boden läuft, auf dem die giftfreie Falle positioniert ist.

4. Giftfreie Falle (100) nach einem der Ansprüche 2-3, **dadurch gekennzeichnet, dass** die Eintrittsöffnung (210) sowohl in der Seitenwand (232) als auch in einem offenen Ende (234) des Tunnels mit offenem Ende positioniert ist.

5. Giftfreie Falle (100) nach einem der Ansprüche 1-4, **dadurch gekennzeichnet, dass** die Tötungseinrichtung (310) der mechanischen und/oder elektrischen Tötungsvorrichtung (300) auf einer Ebene über der Ebene der Ratten- und/oder Mauseintrittsöffnung positioniert ist, sodass die Ratte und/oder Maus die Tötungseinrichtung (310) erreichen kann, wenn sie innerhalb des Gehäuses (200) auf ihren Hinterbeinen steht.

6. Giftfreie Falle (100) nach einem der Ansprüche 1-5, **dadurch gekennzeichnet, dass** die Ratten- und/oder Mauseintrittsöffnung (210) und die eine oder mehreren Reihen von gezackten Vorsprüngen (212) bemessen und konfiguriert sind, um eine Öffnung mit einer freien Höhe von mindestens 40 mm zu lassen.

7. Giftfreie Falle (100) nach einem der Ansprüche 1-6, **dadurch gekennzeichnet, dass** die Ratten- und/oder Mauseintrittsöffnung (210) und die eine oder mehreren Reihen von gezackten Vorsprüngen (212) bemessen und konfiguriert sind, um eine Öffnung mit einer lichten Breite von mindestens 40 mm zu lassen.

8. Giftfreie Falle (100) nach einem der Ansprüche 1-7, **dadurch gekennzeichnet, dass** zumindest der obere Eingangsbereich der Ratten- und/oder Mauseintrittsöffnung (210) mit einer oder mehreren Reihen von gezackten Vorsprüngen (212) ausgekleidet ist.

9. Giftfreie Falle (100) nach einem der Ansprüche 1-8, **dadurch gekennzeichnet, dass** die Tötungsvorrichtung eine mittels Gaskartusche betriebene Vorrichtung ist.

10. Giftfreie Falle (100) nach einem der Ansprüche 1-9, **dadurch gekennzeichnet, dass** die giftfreie Falle (100) ferner eine Einrichtung zum Sichern des Gehäuses am Boden und/oder an einer Wand in der Nähe des Bodens umfasst, um zu vermeiden, dass die Falle auf ihre Seite gedreht werden kann.

## Revendications

1. Piège à rat et/ou souris sans poison (100) à placer sur le sol, le piège sans poison (100) comprenant :
- un boîtier (200) avec une ouverture d'entrée pour un rat et/ou une souris (210) positionnée dans la paroi latérale (220) et/ou dans la paroi inférieure (230) ; et
- un dispositif mortel mécanique et/ou électrique (300) positionné à l'intérieur du boîtier (200) ; **caractérisé en ce que** le moyen mortel (310) du dispositif mortel mécanique et/ou électrique (300) est positionné à un niveau au-dessus du niveau de l'ouverture d'entrée de rat et/ou de souris (210), et dans lequel au moins une partie de l'ouverture d'entrée de rat et/ou de souris (210) est bordée d'une ou de plusieurs rangées de saillies dentelées (212).

2. Piège sans poison (100) selon la revendication 1, **caractérisé en ce que** la paroi inférieure (230) du boîtier (200) est configurée en tant que tunnel à extrémité ouverte, le tunnel étant configuré et dimensionné pour permettre à un rat et/ou une souris de passer d'une extrémité à l'autre ; dans lequel l'ouverture d'entrée de rat et/ou de souris (210) est positionnée a1) dans la paroi latérale (232) et/ou a2) dans une extrémité ouverte (234), et b) dans la paroi supérieure (236) du tunnel à extrémité ouverte.

3. Piège sans poison (100) selon la revendication 2, **caractérisé en ce que** le tunnel à extrémité ouverte est configuré avec un fond ouvert, de sorte qu'un rat et/ou une souris à l'intérieur du tunnel à extrémité ouverte se déplace sur le sol sur lequel le piège sans poison est positionné.

4. Piège sans poison (100) selon l'une quelconque des revendications 2 à 3, **caractérisé en ce que** l'ouverture d'entrée (210) est positionnée dans la paroi latérale (232) et dans une extrémité ouverte (234) du tunnel à extrémité ouverte.

5. Piège sans poison (100) selon l'une quelconque des revendications 1 à 4, **caractérisé en ce que** le moyen mortel (310) du dispositif mortel mécanique et/ou électrique (300) est positionné à un niveau au-dessus du niveau de l'ouverture d'entrée de rat et/ou de souris de sorte que le rat et/ou la souris peuvent atteindre le moyen mortel (310) lorsqu'ils se tiennent debout sur leurs pattes arrière à l'intérieur du boîtier (200).

6. Piège sans poison (100) selon l'une quelconque des revendications 1 à 5, **caractérisé en ce que** l'ouverture d'entrée de rat et/ou de souris (210) et les une ou plusieurs rangées de saillies dentelées (212) sont dimensionnées et configurées pour laisser une ouverture avec une hauteur libre d'au moins 40 mm.

7. Piège sans poison (100) selon l'une quelconque des revendications 1 à 6, **caractérisé en ce que**, l'ouverture d'entrée de rat et/ou de souris (210) et les une ou plusieurs rangées de saillies dentelées (212) sont dimensionnées et configurées pour laisser une ouverture avec une largeur libre d'au moins 40 mm.

8. Piège sans poison (100) selon l'une quelconque des revendications 1 à 7, **caractérisé en ce qu'**au moins la section d'entrée supérieure de l'ouverture d'entrée de rat et/ou de souris (210) est bordée d'une ou de plusieurs rangées de saillies dentelées (212).

9. Piège sans poison (100) selon l'une quelconque des revendications 1 à 8, **caractérisé en ce que** le dispositif mortel est un dispositif actionné par cartouche à gaz.

10. Piège sans poison (100) selon l'une quelconque des revendications 1 à 9, **caractérisé en ce que** le piège sans poison (100) comprend en outre un moyen de fixation du boîtier sur le sol et/ou sur la paroi proche du sol, afin d'éviter que le piège puisse être tourné sur le côté.
